# EUROPEAN PATENT APPLICATION

(11) **EP 1 465 175 A1**
(43) Date of publication of application: **06.10.2004**
(21) Application number: 03701012.1
(22) Date of filing: 06.01.2003
(51) Int. Cl.: G11B 7/26

(54) **METHOD FOR MANUFACTURING STAMPER FOR INFORMATION MEDIUM MANUFACTURE, STAMPER, AND STAMPER INTERMEDIATE WITH MASTER DISK**

(30) Priority: 08.01.2002 JP 2002001774
(71) Applicant: TDK Corporation, Chuo-ku, Tokyo 103-8272 (JP)
(72) Inventor: OYAKE, Hisaji, TDK CORPORATION, Chuo-ku, Tokyo 103-8272 (JP); TAKAHATA, Hiroaki, TDK CORPORATION, Chuo-ku, Tokyo 103-8272 (JP); UTSUNOMIYA, Hajime, TDK CORPORATION, Chuo-ku, Tokyo 103-8272 (JP)
(74) Representative: Wagner & Geyer
(86) International application number: PCT/JP2003/000021
(87) International publication number: WO 2003/058616

(57) **Abstract**

A stamper with a sharp uneven pattern and a favorable surface state is obtained.

A photoresist master 100 is manufactured by forming a light absorption layer 103 and a photoresist layer 104, in that order, on top of a substrate 102, and then forming an uneven pattern 106 in the photoresist layer 104 by forming and developing a latent image, a Ni thin film 108 is formed on top of the uneven pattern 106 of the photoresist master 100 using either a sputtering method or a vapor deposition method, a Ni film 110 is formed on top of the Ni thin film 108, and then the Ni thin film 108 and the Ni film 110 are separated from the photoresist master 100 to form a stamper 120.

## Description

### TECHNICAL FIELD

The present invention relates to a stamper used during the manufacture of an information medium such as an optical disc comprising an uneven pattern such as grooves and prepits, a method of manufacturing the stamper, a stamper intermediate with an attached master formed during manufacture, and an information medium manufactured by the stamper.

### BACKGROUND ART

Optical discs, which represent one type of information media, are currently available in two different varieties: optical recording discs which enable writing or rewriting of information, and read-only discs in which the information has been pre-recorded onto the disc.

A groove (guide channel) that is used for tracking and the like is formed in the disc substrate of an optical recording disc, and a recording layer comprising a phase change material or an organic dye material is laminated on top of the disc substrate. When the laser beam is irradiated onto the recording layer, the recording layer undergoes a chemical or physical change, thus forming a recording mark. In contrast, in the case of a read-only disc, recording marks (information pits) are formed in advance as part of an uneven pattern on the disc substrate. When a reading laser beam is irradiated onto these recording marks, the quantity of reflected light varies, and by detecting these variations, the information is able to be read (played back).

In order to manufacture a disc substrate with an uneven pattern of grooves, information pits, and the like, a stamper is used in which the negative pattern (which is itself a type of uneven pattern) of the desired uneven pattern has been formed. For example, a method of manufacturing a disc substrate by conducting injection molding using a mold with the above stamper secured inside the cavity, thereby transferring the negative pattern to the resin used to fill the cavity, is common.

A stamper with an uneven pattern is usually formed from a metal stamper containing Ni or the like. In the steps required for manufacturing this stamper, first a photoresist master with the negative pattern of the uneven pattern of the stamper is prepared, and a metal film is then formed on this photoresist master by plating. Subsequently, the metal film is separated from the photoresist master, and then subjected to a series of predetermined treatments such as surface washing to form the stamper.

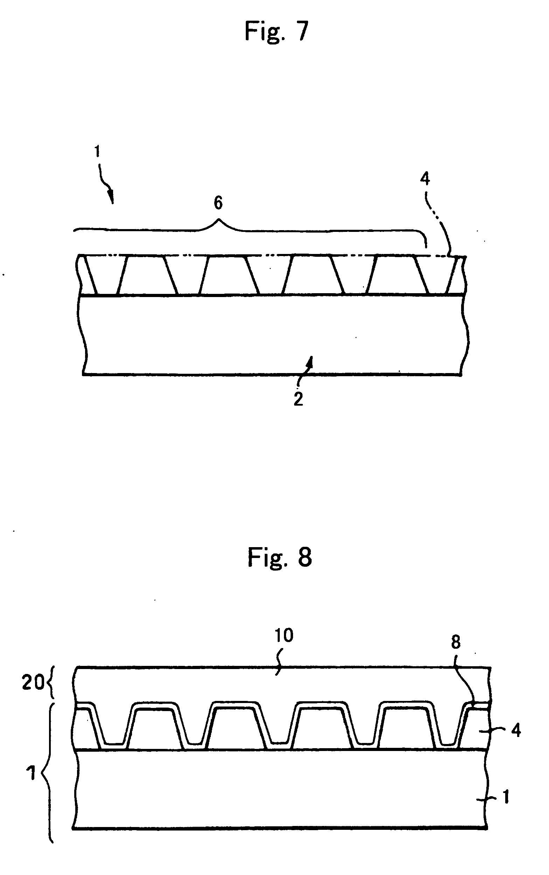

As follows is a description of the manufacturing process for a photoresist master 1, with reference to the conventional photoresist master 1 shown in Fig. 7. First, a photoresist layer 4 is formed on top of a glass substrate 2. Next, the photoresist layer 4 is exposed using a patterning laser beam such as a laser, and the latent image pattern is developed. This enables the production of the photoresist master 1 with an uneven pattern 6 formed in the photoresist layer 4.

In order to use this photoresist master 1 to prepare a stamper 20 by plating, first, as shown in Fig. 8, a thin metal film 8 containing a Ni material or the like is formed on the surface of the uneven pattern 6 using a process such as electroless plating, thereby imparting conductivity to the photoresist master 1.

Subsequently, electroplating is conducted with the thin metal film 8 as a backing, thereby forming a metal film 10 containing Ni or the like. By removing the thin metal film 8 and the metal film 10 from the photoresist master 1, a stamper 20 containing the transferred uneven pattern 6 can be obtained.

In recent years, as the capacity of optical recording media has increased, uneven patterns such as grooves have become much finer, meaning errors in the pattern shape have a large effect on the recording and reading accuracy. Accordingly, it is desirable to form a sharp uneven pattern on the disc substrate, but in order to achieve this sharp pattern, the uneven pattern of the photoresist layer 4, which is the basis for the pattern, must be formed with a high level of precision (sharpness).

The minimum width of the latent image pattern formed on the photoresist layer 4 is limited by the spot diameter of the laser beam when it reaches the photoresist layer 4. When λ is the laser wavelength, and NA is the numerical aperture of the objective lens of the irradiating optical system, then the spot diameter w is represented by the formula w = k·λ/NA. k is a constant that is determined by the aperture shape of the objective lens and the intensity distribution of the incident light beam.

However, even in the case of patterns with widths that theoretically do not exceed the spot diameter limit, if the photoresist layer 4 is thin, then problems of inadequate sharpness can arise due to factors such as shallowness of the uneven pattern transferred to the stamper, or rounding of the shape of the uneven pattern (this is known as pattern sag). It is thought that these problems are caused by fluctuations occurring in the thickness of the photoresist layer 4 (this is known as film thinning) during typical exposure and developing operations. It is thought that these thickness fluctuations are caused by laser beam reflection between the photoresist layer 4 and the glass substrate 2, with this reflection causing excessive exposure of the photoresist layer 4.

The inventor of the present invention has clarified that forming a light absorption layer between the glass substrate 2 and the photoresist layer 4 is an effective way of resolving these problems. By so doing, the light absorption layer can absorb the laser beam and suppress any light reflection, and consequently a sharper exposure and development can be achieved than in a conventional process.

However, based on further research, the inventor of the present invention noticed that a photoresist master 1 with a light absorption layer displayed some problems relating to the formation of the thin metal film 8 by electroless plating. Specifically, it was surmised that a photoresist master 1 in which the light absorption layer was partially exposed was prone to increases in fine irregularities (fine defects) during the electroless plating process. In other words, it was discovered that even though the same method was used to form the thin metal film, on some occasions when the stamper was removed, for some reason or other fine irregularities (fine defects) had been formed on the surface of the uneven pattern of the stamper. During playback these fine irregularities manifest as noise, meaning that despite the attempt to improve the recording capacity by effectively utilizing a light absorption layer, in reality a decrease occurs in the recording and playback performance.

If this problem can be resolved, then the manufacture of a stamper with a sharp uneven pattern should be possible using a photoresist master with a light absorption layer.

### DISCLOSURE OF THE INVENTION

The present invention is directed to a solution to the above described disadvantage, and it is an object of the present invention to provide a method of manufacturing a stamper in which fine irregularities are not formed on the surface of the uneven pattern on the stamper, as well as a stamper manufactured by such a method, a stamper intermediate with an attached photoresist master, and an information medium manufactured by the stamper.

As a result of intensive research on methods of manufacturing information media such as optical discs and magnetic discs (discrete media), the inventor of the present invention discovered a method of forming a sharp uneven pattern on a stamper while suppressing surface defects. In other words, the above object can be achieved by the present invention described below.
(1) A method of manufacturing a stamper for manufacturing an information medium, comprising the steps of: manufacturing a photoresist master by forming at least a light absorption layer and a photoresist layer, in that order, on top of a substrate, irradiating light onto said photoresist layer from an opposite surface to that which contacts said light absorption layer to form a latent image, and then developing said latent image to form an uneven pattern; forming a thin metal film on top of said uneven pattern of said photoresist master using either a sputtering method or a vapor deposition method; forming a metal film on top of said thin metal film; and forming the stamper by separating said thin metal film and said metal film from said photoresist master
(2) A stamper for manufacturing an information medium in a surface of the stamper an uneven pattern being formed in advance, the stamper being manufactured by the steps of: manufacturing a photoresist master by forming at least a light absorption layer and a photoresist layer, in that order, on top of a substrate, irradiating light onto said photoresist layer from an opposite surface to that which contacts said light absorption layer to form a latent image, and then developing said latent image to form an uneven pattern; forming a thin metal film on top of said uneven pattern of said photoresist master using either a sputtering method or a vapor deposition method; forming a metal film on top of said thin metal film; and forming the stamper by separating said thin metal film and said metal film from said photoresist master.
(3) A stamper intermediate with an attached master, in which a thin metal film is formed on a surface of an uneven pattern of a photoresist master for manufacturing a stamper, which has a substrate, a light absorption layer laminated on top of said substrate, and a photoresist layer which is laminated on top of said light absorption layer and is capable of having an uneven pattern formed therein by forming and subsequently developing of a latent image, and said thin metal film, on separation from said photoresist master, forms a part of said stamper, wherein said thin metal film is formed by either a sputtering method or a vapor deposition method'.
(4) An information medium, in which a final uneven pattern is formed by using, as a negative pattern, an uneven pattern of a thin metal film and a metal film of a stamper, the stamper being manufactured by the steps of: manufacturing a photoresist master by forming at least a light absorption layer and a photoresist layer, in that order, on top of a substrate, irradiating light onto said photoresist layer from an opposite surface to that which contacts said light absorption layer to form a latent image, and then developing said latent image to form an uneven pattern; forming a thin metal film on top of said uneven pattern of said photoresist master using either a sputtering method or a vapor deposition method; forming a metal film on top of said thin metal film; and forming said stamper by separating said thin metal film and said metal film from said photoresist master.
(5) The information medium according to (4), wherein
   said final uneven pattern is formed by direct transfer of said uneven pattern from said stamper.
(6) The information medium according to (4), wherein
   said final uneven pattern is formed by transfer of an uneven pattern from a mother stamper, and said uneven pattern of said mother stamper is formed by transfer of said uneven pattern using said stamper as a master stamper.
(7) The information medium according to (4), wherein
   said final uneven pattern is formed by transfer of an uneven pattern from a child stamper, and said uneven pattern of said child stamper is formed by transfer of an uneven pattern from a mother stamper, which has been formed by transfer of said uneven pattern using said stamper as a master stamper.

The inventor of the present invention surmised that it was the application of a conventional thin metal film formation process using electroless plating to a photoresist master on which a light absorption layer had been formed that was causing the generation of fine defects on the uneven pattern surface, and decided to use a sputtering method or a vapor deposition method to form the thin metal film on the photoresist master with a light absorption layer.

According to this invention, the quantity of fine defects on the surface of the uneven pattern of the stamper can be reduced enormously. Furthermore, with sputtering or vapor deposition, no preliminary treatment need be conducted on the photoresist master, meaning the stamper manufacturing process itself can be simplified.

Accordingly, the synergistic effect of the advantages offered by the light absorption layer and the reduction in fine defects provided by using a sputtering method or a vapor deposition method enables a sharp uneven pattern to be transferred more faithfully to a stamper than by conventional processes. As a result, even as uneven patterns are further miniaturized, a compatible surface state can still be retained, and if this type of stamper is used, information media such as the grooves and information pits of an optical disc can also be formed with good sharpness, and this makes it possible to improve the recording and playback characteristics.
Furthermore, because the invention is compatible with future ongoing miniaturization of uneven patterns, it also enables increases in the information memory (recording) capacity of information media.

### BRIEF DESCRIPTION OF THE DRAWINGS

Fig. 1 is a cross-sectional view showing a photoresist master according to an embodiment of the present invention;
Fig. 2(A) is a cross-sectional view showing a state during the manufacture of a stamper using the same photoresist master;
Fig. 2(B) is a cross-sectional view showing the manufactured stamper;
Fig. 3(A) is a diagram showing the result of an AFM analysis of the uneven pattern formed on a stamper according to an example of the present invention;
Fig. 3(B) is a line diagram showing the cross-sectional shape of the uneven pattern determined on the basis of the AFM analysis;
Fig. 4(A) is a diagram showing the result of an AFM analysis of the uneven pattern formed on a stamper according to a comparative example of the present invention;
Fig. 4(B) is a line diagram showing the cross-sectional shape of the uneven pattern determined on the basis of the AFM analysis;
Fig. 5 is a line diagram showing the uneven state of the stamper surface of the above example, as measured by a scanning electron microscope;
Fig. 6 is a line diagram showing the uneven state of the stamper surface of the above comparative example, as measured by a scanning electron microscope;
Fig. 7 is a cross-sectional view showing a conventional photoresist master; and
Fig. 8 is a cross-sectional view showing a state during the manufacture of a stamper using the same conventional photoresist master.

### BEST MODE FOR CARRYING OUT THE INVENTION

As follows is a detailed description of an embodiment of the present invention, based on the drawings.

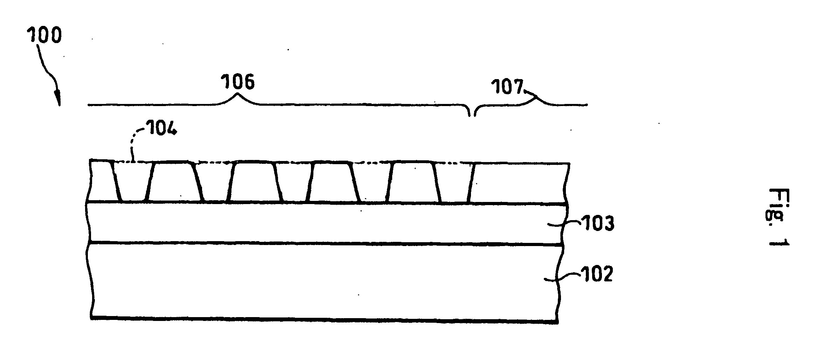

Fig. 1 shows a photoresist master 100 according to the embodiment of the present invention. This photoresist master 100 comprises a glass substrate 102, a light absorption layer 103 laminated on top of this glass substrate 102, and a photoresist layer 104 laminated on top of this light absorption layer 103. A latent image of an uneven pattern is formed on the photoresist layer 104, on the opposite side from the light absorption layer 103 (the top side in Fig. 1), by exposure with a patterning laser beam, and development of this latent image causes the removal of a portion of the photoresist layer, forming an uneven pattern 106. Following developing, portions of the light absorption layer 103 are exposed at the bottom surfaces of the concave sections of the uneven pattern 106. The numeral 107 in Fig. 1 shows a non-uneven area in which the uneven pattern has not been formed.

As described below, the aforementioned uneven pattern 106 becomes the pattern surface 206 of a stamper 120. Furthermore, the area in which the uneven pattern has not been formed becomes the mirror surface 207 of the stamper 120. During exposure, the patterning laser beam is absorbed by the light absorption layer 103, thereby suppressing light reflection and enabling the formation of fine unevennesses with good sharpness.

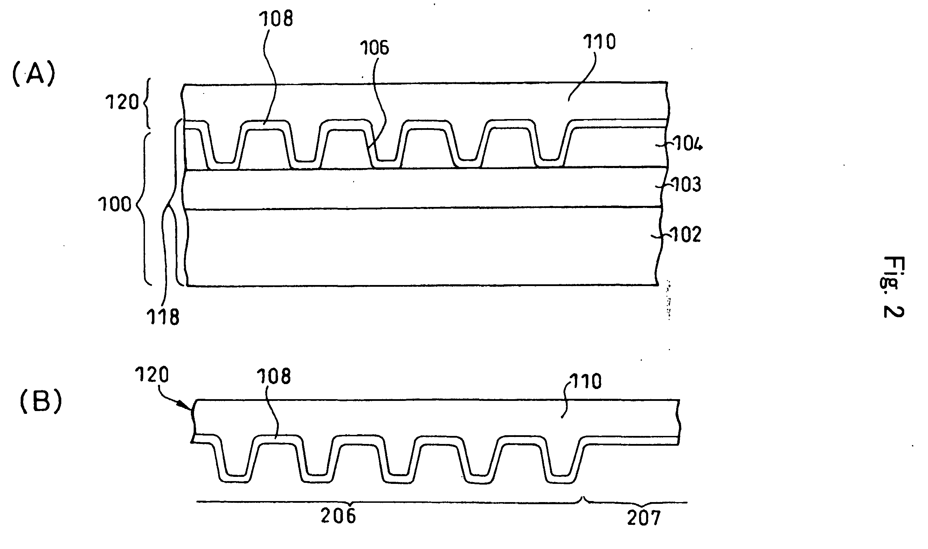

Fig. 2(A) shows the stamper 120 formed using the above photoresist master 100.

In this formation process, first a sputtering method or a vapor deposition method is used to form a Ni thin film 108 on the surface of the uneven pattern 106. At this point, a stamper intermediate 118 with an attached master is obtained, in which the photoresist master 100 and the Ni thin film 108, which is separated from the photoresist master in a later process and forms a portion of the stamper 120, are integrated together as a single unit.

Subsequently, a current is passed through the surface, using the Ni thin film 108 as a backing, and electroplating is carried out to form a Ni film 110. If the Ni thin film 108 and the Ni film 110 are then removed from the photoresist master 100, then as shown in Fig. 2(B), a stamper 120 comprising an accurately transferred uneven pattern 106 can be obtained.

In this stamper 120, the pattern surface 206 is formed in the area corresponding with the uneven pattern 106, and the mirror surface 207 is formed in the area corresponding with the non-uneven area 107.

Although not specifically shown in the drawings, the stamper 120 can then be installed in a mold, and injection molding or the like is used to manufacture an optical disc substrates having a final uneven pattern which is created by transferring the uneven pattern 106 as a negative pattern. In addition to using the stamper 120 to manufacture optical disc substrates, the stamper 120 can also be used as a master stamper for preparing a mother stamper by an electroforming process, and this mother stamper can then be used to manufacture optical discs. In addition, this mother stamper could also be used as a master for preparing a child stamper, and this child stamper can then be used to manufacture the optical discs.

In other words, the stamper 120 of the present invention need not necessarily be used directly for the manufacture of optical discs, but may also be used indirectly for such optical disc manufacture, as the master stamper used in the preparation of a mother stamper or the like.

In the photoresist layer 104 of this embodiment, the provision of the light absorption layer 103 enables a well defined latent image to be projected, thus enabling a sharp uneven pattern 106 to be produced. In addition, because a sputtering method or a vapor deposition method is used for forming the thin metal film, the Ni thin film 108 can be formed with an extremely faithful transfer of the state of the uneven pattern 106, including any surface defects. Because the uneven pattern 106 formed in the photoresist layer 104 contains almost no surface defects, the quantity of fine defects on the surface of the uneven pattern transferred to the stamper 120 can also be significantly reduced. By using this stamper 120, information media with suppressed noise levels and good levels of recording and reading (playback) accuracy can be produced.

In the present embodiment only the case involving sputtering or vapor deposition using Ni was described, but the present invention is not limited to this case, and other metals can also be used.

Furthermore, the stamper described above is applicable not only to optical discs, but can also be applied generally to the manufacture of information media, including magnetic discs (discrete media).

### EXAMPLES

### (Example: Stamper No. 1)

Following formation of a layer of a coupling agent on top of a polished glass substrate, a light absorption layer was formed by spin coating. The application liquid used was SWK-T5D60 (manufactured by Tokyo Ohka Kogyo Co., Ltd.) containing 4,4'-bis(diethylamino)benzophenone as a light absorption agent. The applied layer was baked at 200°C for 15 minutes to cure the layer and remove residual solvent, thus forming a light absorption layer of 140 nm in thickness. Subsequently, a photoresist (DVR100 manufactured by Zeon Corporation) was spin coated onto the light absorption layer, and residual solvent was vaporized by baking, thus forming a photoresist layer of 25 nm in thickness.

Subsequently, using a cutting machine manufactured by Sony Corporation, and targeting the formation of a groove pattern with a track pitch of 320 nm and a groove width of 150 nm, the photoresist layer was exposed with a Kr laser (wavelength = 351 nm) and subsequently developed to form an uneven pattern, thus producing a photoresist master.

A Ni thin film was then formed on the surface of the photoresist layer of this photoresist master by sputtering. Electroplating was then conducted with this Ni thin film as a backing, forming a Ni film. The laminate formed from this Ni thin film and the Ni film was separated from the master, the rear surface was polished, and the surface was washed, thus completing production of a stamper No. 1.

### (Comparative Example: Stamper No. 2)

With the exception of forming the Ni thin film using electroless plating, a stamper No. 2 was prepared in the same manner as the preparation of the stamper No. 1. Specifically, instead of using sputtering, the surface of the photoresist layer of the photoresist master was activated with a surfactant, and a catalyst (a Pd, Sn colloid) was then applied as a preliminary treatment to electroless plating. Subsequently, an accelerator (HBF₄ solution) was used to remove the Sn and achieve deposition of the Pd onto the photoresist surface, and the photoresist master was then immersed in a NiCl₂ solution, and a Ni thin film was formed by electroless plating.

### (Comparative Example: Stamper No. 3)

With the exception of not providing a light absorption layer, a stamper No. 3 was prepared in the same manner as the preparation of the stamper No. 1.

### (Evaluation Results 1)

The shape of the uneven pattern formed on each stamper was confirmed by inspection using an AFM (atomic force microscope). A silicon nitride (SiN) probe tip was used for the AFM probe. Measurement was conducted using a non-contact mode, and the variations in atomic force between the sample and the probe were converted to an image.

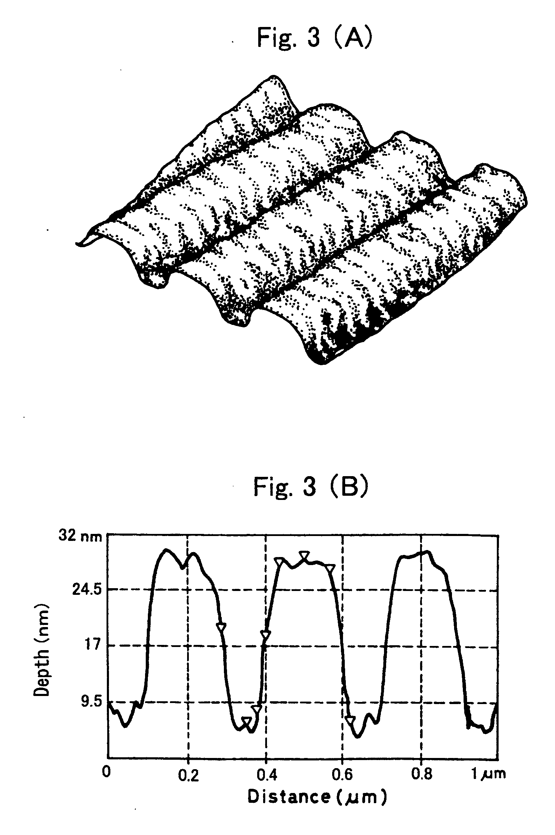

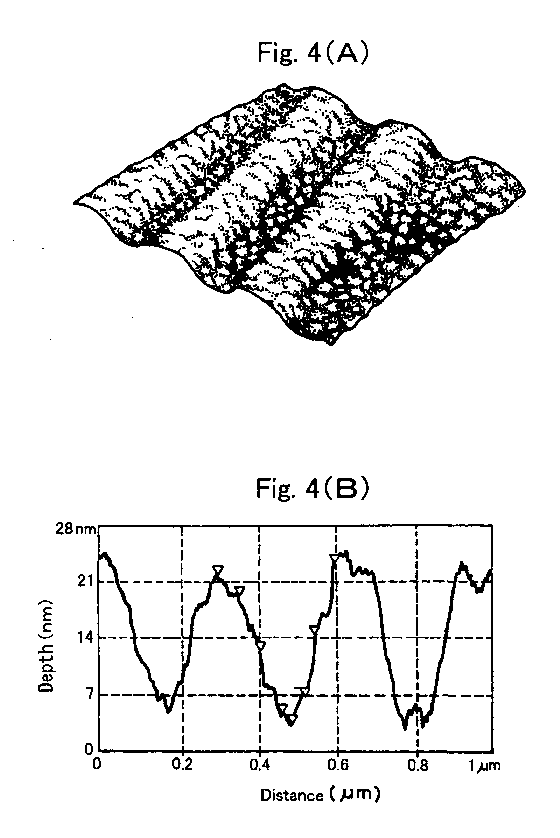

Fig. 3(A) shows the AFM image of the stamper No. 1, and Fig. 3(B) is a line diagram showing the cross-sectional shape of the same image. Similarly, Fig. 4(A) shows the AFM image of the stamper No. 3, and Fig. 4(B) is a line diagram showing the cross-sectional shape of the same image. In the AFM images, the dark areas of high dot density represent the concave sections within the uneven patterns, and the areas of low dot density or the white areas represent the convex sections, and these concave and convex sections correspond with the convex and concave sections respectively of the uneven pattern on the photoresist master. In Fig. 3(B) and Fig. 4(B), the uneven patterns are formed with a pitch of 0.32 µm.

As is evident from comparing Fig. 3 and Fig. 4, in the stamper No. 1 that was manufactured in accordance with the present invention, a sharp pattern was formed, and that pattern was transferred faithfully to the stamper.

### (Evaluation Results 2)

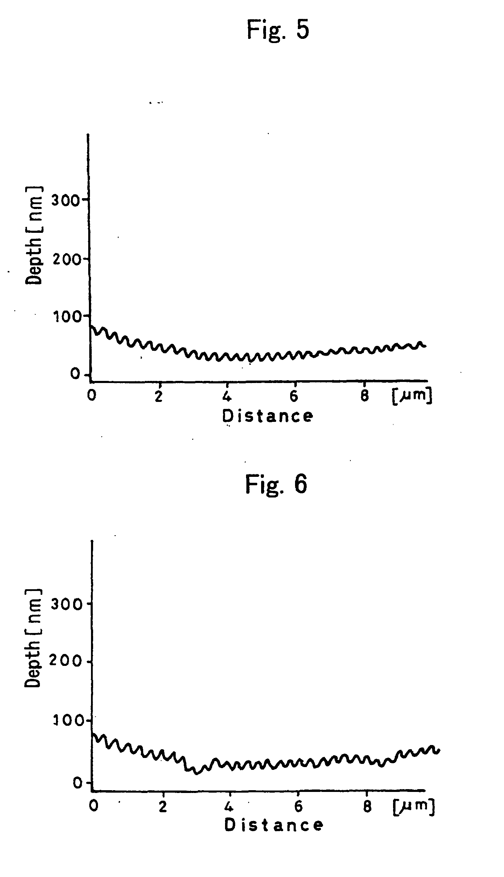

The uneven states of the stamper No. 1 and the stamper No. 2, as measured by a scanning electron microscope (10,000x magnification), are shown in Fig. 5 and Fig. 6, respectively. By comparing Fig. 5 and Fig. 6 it is evident that whereas no fine irregularities can be seen for the stamper No. 1, in the stamper No. 2, fine irregularities that appear as indentations with a width of approximately 1 µm are clearly visible at approximately 3 µm and 8.5 µm along the horizontal axis. In Fig. 5 and Fig. 6, the unevennesses that appear with a pitch of approximately 0.3 µm represent the uneven pattern formed in the present invention.

### INDUSTRIAL APPLICABILITY

In the present invention, the light absorption layer contacting the photoresist layer enables the formation of a sharp uneven pattern on the photoresist master, and by forming a thin metal film by either sputtering or vapor deposition, fine defects on the pattern surface can be suppressed while the uneven pattern is transferred faithfully to a stamper.

## Claims

1. A method of manufacturing a stamper for manufacturing an information medium, comprising the steps of:
manufacturing a photoresist master by forming at least a light absorption layer and a photoresist layer, in that order, on top of a substrate, irradiating light onto said photoresist layer from an opposite surface to that which contacts said light absorption layer to form a latent image, and then developing said latent image to form an uneven pattern;
forming a thin metal film on top of said uneven pattern of said photoresist master using either a sputtering method or a vapor deposition method;
forming a metal film on top of said thin metal film; and
forming the stamper by separating said thin metal film and said metal film from said photoresist master

2. A stamper for manufacturing an information medium in a surface of the stamper an uneven pattern being formed in advance, the stamper being manufactured by the steps of:
manufacturing a photoresist master by forming at least a light absorption layer and a photoresist layer, in that order, on top of a substrate, irradiating light onto said photoresist layer from an opposite surface to that which contacts said light absorption layer to form a latent image, and then developing said latent image to form an uneven pattern; forming a thin metal film on top of said uneven pattern of said photoresist master using either a sputtering method or a vapor deposition method; forming a metal film on top of said thin metal film; and forming the stamper by separating said thin metal film and said metal film from said photoresist master.

3. A stamper intermediate with an attached master, in which a thin metal film is formed on a surface of an uneven pattern of a photoresist master for manufacturing a stamper, which has a substrate, a light absorption layer laminated on top of said substrate, and a photoresist layer which is laminated on top of said light absorption layer and is capable of having an uneven pattern formed therein by forming and subsequently developing of a latent image, and said thin metal film, on separation from said photoresist master, forms a part of said stamper, wherein said thin metal film is formed by either a sputtering method or a vapor deposition method.

4. An information medium, in which a final uneven pattern is formed by using, as a negative pattern, an uneven pattern of a thin metal film and a metal film of a stamper, the stamper being manufactured by the steps of: manufacturing a photoresist master by forming at least a light absorption layer and a photoresist layer, in that order, on top of a substrate, irradiating light onto said photoresist layer from an opposite surface to that which contacts said light absorption layer to form a latent image, and then developing said latent image to form an uneven pattern; forming a thin metal film on top of said uneven pattern of said photoresist master using either a sputtering method or a vapor deposition method; forming a metal film on top of said thin metal film; and forming said stamper by separating said thin metal film and said metal film from said photoresist master.

5. The information medium according to claim 4, wherein
said final uneven pattern is formed by direct transfer of said uneven pattern from said stamper.

6. The information medium according to claim 4, wherein
said final uneven pattern is formed by transfer of an uneven pattern from a mother stamper, and said uneven pattern of said mother stamper is formed by transfer of said uneven pattern using said stamper as a master stamper.

7. The information medium according to claim 4, wherein
said final uneven pattern is formed by transfer of an uneven pattern from a child stamper, and said uneven pattern of said child stamper is formed by transfer of an uneven pattern from a mother stamper, which has been formed by transfer of said uneven pattern using said stamper as a master stamper.
